# EUROPEAN PATENT APPLICATION

(11) **EP 4 068 851 A1**
(43) Date of publication of application: **05.10.2022**
(21) Application number: 21199783.8
(22) Date of filing: 29.09.2021
(51) Int. Cl.: H04W 36/00, H04W 28/08, H04W 36/30, H04L 47/127, H04W 24/02, H04W 36/24

(54) **METHOD FOR IDENTIFYING USER EQUIPMENT FOR HANDOVER AND TARGET CELL SELECTION**

(30) Priority: 31.03.2021 IN 202111015014
(71) Applicant: Sterlite Technologies Limited, Haryana 122002 (IN)
(72) Inventor: PAREKH, Shyam, California, 94563 (US); TANG, Kevin, California, 94568 (US); MANNA, Tanumay, 122002 Haryana (IN); KUMAR, Abhishek, 122002 Haryana (IN)
(74) Representative: Hepworth Browne

(57) **Abstract**

A method for identifying a user equipment for a real-time handover and selecting a target cell by a Radio access network (RAN) controller (102) in a radio access network (RAN) environment includes obtaining a serving cell load parameter with respect to a neighbour cell load parameter associated with a neighbour cell, identifying the at least one user equipment positioned in a serving cell (110) based on a channel quality index (CQI) and a throughput value, transmitting the serving cell load parameter with respect to the neighbour cell load parameter to the identified user equipment and selecting the target cell from the neighbour cells (108a, 108b) for the user equipment.

## Description

### TECHNICAL FIELD

Embodiments of the present disclosure relate to the field of a field of wireless communication. And more particularly, relates to a method for identifying user equipment for handover and target cell selection in an open-radio access network (O-RAN) environment.

The present application claims the benefit of Indian Application No. 202111015014 titled "Method for Identifying User Equipment for Handover and Target Cell Selection" filed by the applicant on 31st March 2021, which is incorporated herein by reference in its entirety.

### Background Art

For a continuum of cellular telecommunication, handover (HO) or a cell reselection is performed, in which, when a user equipment (UE) is moved from a service area defined by "A" cell into that defined by "B" cell, the UE must disconnect with "A" base station and connect with "B" base station (i.e., establish a new connection). In addition, network congestion is a growing problem for wireless network operators.

For example, for some UEs, the cell offering the strongest radio reception may also be the most heavily loaded with other UEs who are currently being served. Handing over of still more UEs into that cell shall aggravate the congestion that may already exist. This may result in degraded quality of service, dropping of calls, denial of service, and the like. All of these may result in loss of reputation of the wireless network operators and loss of revenue for the wireless network operators.

Although the need of HO, the unnecessarily switching of the serving cell and in case of switching to a loaded cell, in both these cases, causes wastage of radio resources and decrease in system efficiency. Hence, in order to effectively manage the HO operation, it is vital to monitor and consider the parameters, including the variation therein, constituting the HO in consideration with load balancing of the cells. The parameters may include, but not limited to, identification of UEs for HO requirement, selection of target cells for the identified UEs. Especially, considering the current expansion in the wireless communication networks are becoming increasingly complex and due to the introduction of new standards and protocols (such as 4G/5G standards), the monitoring of these parameters in order to effectively utilize the radio resources, is at utmost priority. Some of the prior art references are given below:

Chinese Patent Application CN106031292B discloses a method which involves sending radio resource management (RRM) measurement results to an evolved node B (eNB) by a user equipment (UE). A procedure toward a second eNB is initiated by the first eNB for configuring the UE with dual connectivity mode of operation over a X2 interface with a first serving frequency to be served by the second eNB based on RRM measurement results for a configured frequency received from the UE apart from a second serving frequency served by the first eNB.

Another patent application WO2018005089A1 discloses a method which involves performing a set of checks for verifying that a mobile terminal (102) supports interference cancellation. A handover-offset value is determined to change a handover threshold to trigger handover of a wireless connection of the mobile terminal from first cell to second cell with the handover-offset value being determined based on a resource-utilization level of the second cell. A control message is transmitted to cause the mobile terminal to change the handover threshold, where the control message is transmitted in response to the checks to be passed.

Another patent application EP3251406A1 discloses a method which involves receiving data from a cell in a network, where the data comprises information regarding handover such that the cell in the network from which the data is received defines a predetermined target cell to which a user equipment (UE) performs handover. Handover configuration data is provided to the UE, where the handover data comprises event triggering condition. Context information associated with the UE for preparing the target cell for handover procedure initiated by the UE is provided to the predetermined target cell.

In light of the above-stated discussion, there is a need to overcome the above stated disadvantages. There is an urgent need for a technical solution that overcomes the above stated limitations in the prior arts such as providing significant considerations to counter drawbacks associated with identification of UEs based on CQI values for handover requirement and selection of target cells for the identified UEs. Hence, the present invention focuses on a method for identifying user equipment for handover and target cell selection

### SUMMARY OF THE DISCLOSURE

Embodiments of the present disclosure provide a method for identifying user equipment for handover and target cell selection.

According to first aspect of the disclosure, the method for identifying at least one user equipment for a real-time handover and selecting a target cell by a Radio access network (RAN) controller in a radio access network (RAN) environment includes steps of obtaining a serving cell load parameter with respect to a neighbour cell load parameter associated with at least one neighbour cell of a plurality of neighbour cells, identifying the at least one user equipment positioned in a serving cell based on a channel quality index (CQI) and a throughput value, transmitting the serving cell load parameter with respect to the neighbour cell load parameter associated with the at least one neighbour cell of the plurality of neighbour cells to an at least one identified user equipment and selecting the target cell from the plurality of neighbour cells for the at least one user equipment.

In accordance with an embodiment of the present invention, the serving cell load parameter corresponds to a comparative load value of the serving cell with respect to the at least one neighbour cell of the plurality of neighbour cells .

According to the second aspect of the disclosure, the radio access network (RAN) environment is an open RAN (O-RAN) environment. In particular, the O-RAN environment comprises the Radio access network (RAN) controller and the serving cell. Moreover, the Radio access network (RAN) controller is connected with a plurality of user equipment. Furthermore, a plurality of user equipment is positioned in the serving cell.

In accordance with an embodiment of the present invention, the serving cell covers a location for serving the plurality of user equipment.

In accordance with an embodiment of the present invention, the serving cell is positioned adjacent to the plurality of neighbour cells.

According to the third aspect of the disclosure, the identification of the at least one user equipment positioned in the serving cell further comprising determining one or more user equipment from the plurality of user equipment positioned in the serving cell and identifying the at least one user equipment from one or more determined user equipment positioned in the serving cell.

In accordance with an embodiment of the present invention, each of one or more determined user equipment has the channel quality index (CQI) less than a predetermined threshold lower CQI.

In accordance with an embodiment of the present invention, at least one identified user equipment has the throughput value more than a predetermined threshold throughput.

According to the fourth aspect of the disclosure, the method further comprises a step of repeating the identification of at least one user equipment positioned in the serving cell based on the channel quality index after a predetermined time interval.

According to the fifth aspect of the disclosure, the selection of the target cell from the plurality of neighbour cells for the at least one identified user equipment further includes obtaining at least one quality of service (QoS) class identifier (QCI) level associated with at least one active bearer in the at least one identified user equipment, obtaining a received signal strength value, a first load value and a plurality of second load values for each of the plurality of neighbour cells and selecting the target cell from the plurality of neighbour cells based on the at least one QCI level in the at least one identified user equipment and the received signal strength value, the first load value and the plurality of second load values for each the plurality of neighbour cells.

In accordance with an embodiment of the present invention, at least one QCI level corresponds to a QoS value required by the at least one active bearer in the at least one identified user equipment to provide a service.

In accordance with an embodiment of the present invention, at least one active bearer corresponds to connections between the at least one identified user equipment and a packet data network gateway to provide the service.

In accordance with an embodiment of the present invention, the first load value comprises average physical resource block (PRB) values of each of the plurality of neighbour cells .

In accordance with an embodiment of the present invention, the plurality of second load values comprises average PRB values by at least one QCI level for each of the plurality of neighbour cells.

In accordance with an embodiment of the present invention, the received signal strength value comprises one of Reference Signal Received Power (RSRP) and Reference Signal Received Quality (RSRQ).

In accordance with an embodiment of the present invention, the identification of at least one user equipment positioned in the serving cell based on the channel quality index (CQI) is executed when a new value of the serving cell load parameter with respect to the neighbour cell load parameter is identified.

In accordance with an embodiment of the present invention, the selection of the target cell from the plurality of neighbour cells for the at least one identified user equipment is executed when load of the serving cell is greater than load of the at least one neighbour cell of the plurality of neighbour cells .

In accordance with an embodiment of the present invention, the selection of the target cell from the plurality of neighbour cells for the at least one identified user equipment further comprising receiving at least one A3 event report from the at least one identified user equipment positioned in the serving cell .

The method further includes repeating the identification of at least one user equipment positioned in the serving cell based on the channel quality index after a predetermined time interval. The selection of the target cell for the at least one identified user equipment includes obtaining at least one quality of service (QoS) class identifier (QCI) level associated with at least one active bearer in the at least one identified user equipment. The at least one QCI level corresponds to a QoS value required by the at least one active bearer in the at least one identified user equipment to provide a service. The at least one active bearer corresponds to connections between the at least one identified user equipment and a packet data network gateway to provide the service. In addition, the selection of the target cell for the at least one identified user equipment includes obtaining a received signal strength value, a first load value and a plurality of second load values for each of the plurality of neighbour cells. The received signal strength value includes one of Reference Signal Received Power (RSRP) and Reference Signal Received Quality (RSRQ). The first load value includes average physical resource block (PRB) values of each of the plurality of neighbour cells. The plurality of second load values includes average PRB values by the at least one QCI level for each of the plurality of neighbour cells. Further, the selection of the target cell includes selecting the target cell based on the at least one QCI level and the received signal strength value, the first load value and the plurality of second load values.

These and other aspects of the invention herein will be better appreciated and understood when considered in conjunction with the following description and the accompanying drawings. It should be understood, however, that the following descriptions, while indicating preferred examples and numerous specific details thereof, are given by way of illustration and not of limitation. Many changes and modifications may be made within the scope of the invention herein without departing from the spirit thereof, and the invention herein include all such modification.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a block diagram illustrating an exemplary radio access network (RAN) in accordance with an embodiment of the present invention;
Fig. 2 is a sequence diagram illustrating a method for performing real-time handover in accordance with an embodiment of the present invention;
Fig. 3 is a block diagram illustrating an Open-Radio access network (O-RAN) environment in accordance with an embodiment of the present invention;
Fig. 4 is a flow chart illustrating a method to identify at least one user equipment for real-time handover and select a target cell in the open RAN (O-RAN) environment in accordance with an embodiment of the present invention;
Fig. 5 is a flowchart illustrating a method for the selecting a target cell for the identified user equipment in accordance with an embodiment of the present invention.

### REFERENCE LIST

Radio access network (RAN) 100
RAN controller 102
Serving Base Station 104
Neighbour Base Stations 106a-106b
Neighbour Cells 108a -108b
Serving Cell 110
User Equipment (UEs) 112a, 112b, 112c, 112d, and 112e
Open-Radio Access Network (O-RAN) Environment 300
Service Management and Orchestration (SMO) Framework 302
Radio access network (RAN)Intelligent Controller (RIC) 308
Non-real-time-radio Intelligent Controller (Non-RT-RIC) 304
Near-real-time-radio Intelligent Controller (Near-RT-RIC) 306

The method illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". [0052] Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### The following brief definition of terms shall apply throughout the present invention:

Standard networking terms and abbreviation: RAN: a RAN may stand for radio access network. The radio access network (RAN) is a part of a telecommunications system which may connect individual devices to other parts of a network through radio connections. The RAN may provide a connection of user equipment (UE) such as mobile phone or computer with the core network of the telecommunication systems. The RAN is an essential part of the access layer in the telecommunication systems which utilize base stations (such as e node B, g node B) for establishing radio connections.

Active bearer: An active bearer corresponds to tunnel connections between the UE and a packet data network gateway to provide a service.

O-RAN: O-RAN is an evolved version of prior radio access networks, makes the prior radio access networks more open and smarter than previous generations. The O-RAN provides real-time analytics that drive embedded machine learning systems and artificial intelligence back-end modules to empower network intelligence. Further, the O-RAN includes virtualized network elements with open and standardized interfaces. The open interfaces are essential to enable smaller vendors and operators to quickly introduce their own services or enables operators to customize the network to suit their own unique needs. Open interfaces also enable multivendor deployments, enabling a more competitive and vibrant supplier ecosystem. Similarly, open-source software and hardware reference designs enable faster, more democratic and permission less innovation. Further, the O-RAN introduces a self-driving network by utilizing new learning-based technologies to automate operational network functions. These learning-based technologies make the O-RAN intelligent. Embedded intelligence, applied at both component and network levels, enables dynamic local radio resource allocation and optimizes network wide efficiency. In combination with O-RAN's open interfaces, AI-optimized closed-loop automation is a new era for network operations.

QoS Class identifier (QCI): QCI level corresponds to a QoS value required by the active bearer in the UE to provide the service.

Near real time RAN Intelligent Controller (Near-RT RIC): Near-RT RIC is a logical function that enables near-real-time control and optimization of O-RAN elements and resources via fine-grained data collection and actions over E2 interface.

Non-Real Time Radio Intelligent Controller (Non-RT-RIC): Non-RT-RIC is a logical function that enables non-real-time control and optimization of RAN elements and resources, AI/ML workflow including model training and updates, and policy-based guidance of applications/features in near-RT RIC. It is a part of the Service Management and Orchestration Framework and communicates to the near-RT RIC using the A1 interface. Non-RT control functionality (> 1s) and near-Real Time (near-RT) control functions (< 1s) are decoupled in the RIC. Non-RT functions include service and policy management, RAN analytics and model-training for some of the near-RT RIC functionality, and non-RT RIC optimization.

O-CU is O-RAN Central Unit, which is a logical node hosting RRC, SDAP and PDCP protocols.

O-CU-CP is O-RAN Central Unit - Control Plane, which is a logical node hosting the RRC and the control plane part of the PDCP protocol.

The O-CU-UP is O-RAN Central Unit - User Plane, which is a logical node hosting the user plane part of the PDCP protocol and the SDAP protocol.

O-DU is an O-RAN Distributed Unit, which is a logical node hosting RLC/MAC/High-PHY layers based on a lower layer functional split.

O-RU is an O-RAN Radio Unit, which is a logical node hosting Low-PHY layer and RF processing based on a lower layer functional split. This is similar to 3GPP's "TRP" or "RRH" but more specific in including the Low-PHY layer (FFT/iFFT, PRACH extraction).

O1 interface is an interface between management entities in a Service Management and Orchestration (SMO) Framework and O-RAN managed elements, for operation and management, by which FCAPS management, Software management, File management shall be achieved.

xAPP is an independent software plug-in to the Near-RT RIC platform to provide functional extensibility to the RAN by third parties." The near-RT RIC controller can be provided different functionalities by using programmable modules as xAPPs, from different operators and vendors.

gNB: New Radio (NR) Base stations which have capability to interface with 5G Core named as NG-CN over NG-C/U (NG2/NG3) interface as well as 4G Core known as Evolved Packet Core (EPC) over S1-C/U interface.

LTE eNB: An LTE eNB is an evolved eNodeB that can support connectivity to EPC as well as NG-CN.

Non-standalone NR: It is a 5G Network deployment configuration, where a gNB needs an LTE eNodeB as an anchor for control plane connectivity to 4G EPC or LTE eNB as anchor for control plane connectivity to NG-CN.

Standalone NR: It is a 5G Network deployment configuration where gNB does not need any assistance for connectivity to core Network, it can connect by its own to NG-CN over NG2 and NG3 interfaces.

Non-standalone E-UTRA: It is a 5G Network deployment configuration where the LTE eNB requires a gNB as anchor for control plane connectivity to NG-CN.

Standalone E-UTRA: It is a typical 4G network deployment where a 4G LTE eNB connects to EPC.

Xn Interface: It is a logical interface which interconnects the New RAN nodes i.e., it interconnects gNB to gNB and LTE eNB to gNB and vice versa.

Reference signal received power (RSRP): RSRP is defined as the linear average over the power contributions (in [W]) of the resource elements that carry cell-specific reference signals within the considered measurement frequency bandwidth." RSRP is the power of the LTE Reference Signals spread over the full bandwidth and narrowband.

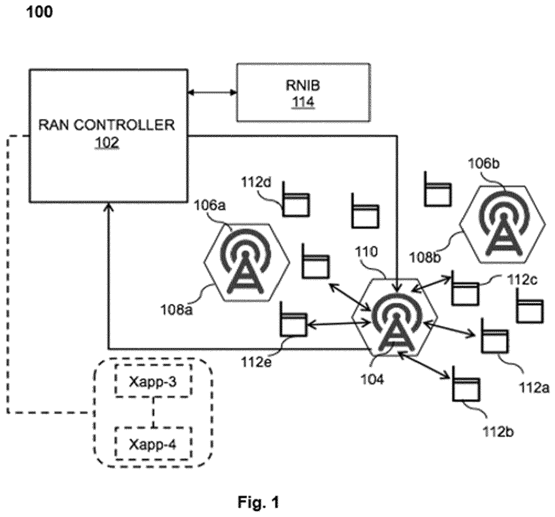

Fig. 1 is a block diagram illustrating an exemplary radio access network (RAN) in accordance with an embodiment of the present invention. In particular, the radio access network (RAN) 100 that includes a plurality of user equipment (UEs) such as 112a, 112b, 112c, 112d, and 112e connected to a serving base station 104 position in a serving cell 110. Further, the example radio access network 100 includes a plurality of neighbour base stations 106a and 106b positioned in respective neighbour cells 108a and 108b.

In some examples, the RAN 100 includes a RAN controller 102. The RAN 100, in one example, is implemented in a virtualized network architecture (such as for example, open-radio access network (O-RAN)) and includes at least one RAN controller 102.

In some examples, the RAN controller 102 is configured to perform operations related to real-time handover of the plurality of UEs 112a-e.

In some examples, the RAN controller 102 is implemented via a virtualized application that is xApps i.e., xApp-3 and xApp-4 that are configured to virtually perform the operations of the RAN controller 102.

In an implementation, one or more parameters used by the xApp-4 may include, but not limited to, minimum RSRP/RSRQ Threshold = TH₀ = -114 dBm (for RSRP) or -13 dB (for RSRQ) (Default), RSRP/RSRQ band threshold-1 = TH₁ = -103 dBm (for RSRP) or -9 dB (for RSRQ) (Default), RSRP/RSRQ band threshold-2 = TH₂ = -85 dBm (for RSRP) or -5 dB (for RSRQ) (Default), "Average" load threshold-1 = PRB_{TH1} = 0.6 (Default), "Average" load threshold-2 = PRB_{TH2} = 0.7 (Default), QTHPT (UE per QCI/5QI Throughput Threshold) = 1 Kbps (Default), NMEAS (Number of individual measurements) used or throughput computation = 8 (Default), and Δ (Inter-measurement interval) = 128 ms (Default).

Particularly, the RAN controller 102 is configured to communicate with a core network (not shown) including an evolved packet core (EPC) using an "S1" interface. Moreover, the RAN controller 102 may communicate with the core network including Mobility Management Entity (MME) and a User plane entity (UPE) identified as Serving Gateway (S-GW) using S1-C and S1-U for control plane and user plane, respectively.

In accordance with an an embodiment of the present invention, each of the plurality of UEs 112a-e periodically measures received signal strengths/qualities from each of the base stations 104, 106a and 106b and construct signal strength/quality indicators such as Reference Signal Received Power (RSRP) and Reference Signal Received Quality (RSRQ) values as defined in the 3GPP standards. Then using the criteria as defined in the 3GPP standards, when an A3 event triggers, these measurement results are reported to the serving base station 104. The disclosure is not limited to the A3 event (for example, subscription of multiple events such as A1-A6 and the measurements and handover parameters defined therein.) Any future standards are expected to have equivalent handover events and equivalent measurements and parameters associated with such handover events. For those standards, when such equivalent events trigger, said equivalent measurements are reported. The measurements in the form of measurement reports (MRs).

Particularly, the MRs are sent to the RAN controller 102. The RAN controller 102 then executes a real-time handover trigger and target cell selection, according to the proposed invention. Additionally, base station loads, in terms of number of UEs served, total computational, energy, memory, wireless resource usage levels of the base station, etc., are also made available, by the RAN controller 102. Further, for example, the HO parameters of each cell are also provided to the RAN controller 102.

The HO parameters such as, for example, offset parameters (i.e., cell indication offset (CIO)), hysteresis parameter and time to trigger parameter defined therein, or equivalent parameters of future standards. In some examples, the MRs may also include signal strength metrics that are the RSRP and/or the RSRQ values.

In some examples, when the RAN controller 102 receives the MRs and/or the HO parameters, it triggers a first HO process and a second HO process. The first HO process and second HO process is performed parallelly on the serving cell 110 and on all the neighbour cells 108a and 108b. In some examples, the first HO process and the second HO process are triggered simultaneously in parallel. That is, multiple HO of the UEs can be performed accurately in that the RAN controller 102 is configured to perform, parallelly on all the identified target neighbour cells 108a and 108b, the HO process (first and second) from the serving cell 110 to the identified target neighbour cells 108a and 108b.

In particular, the base stations 104, 106a and 106b may include, for example, an access node such as e.g. a Radio Base Station (RBS), also referred to as e.g., evolved Node B ("eNB"), "eNodeB", "NodeB", "B node", gNB, or BTS (Base Transceiver Station), depending on the technology and terminology used. Moreover, the base stations 104, 106a and 106b is a logical node that handles transmission and reception of signals associated with either the serving cell 110 and the plurality of neighbour cells 108a and 108b. The serving cell 110 and the plurality of neighbour cells 108a and 108b may connect to each other via "Xn" interface.

Further, the base station 104 and the plurality of neighbour base stations 106a and 106b may connect to one or more antennas, such as the antenna, thus respective base stations are responsible for the serving cell 110 and the plurality of neighbour cells 108a and 108b. In some examples, the base station 104 is configured to broadcast the HO parameters or the updated HO parameters to the plurality of UEs 112a-e served by the base station 104. The HO parameters, in one example, are communicated to the plurality of neighbour base stations 106a and 106b using the "Xn" interface.

The plurality of UEs 112a-e is the devices used to initiate a communication, such as a computer, a personal digital assistant (PDA), a laptop or electronic notebook, a cellular telephone, or any other device, component, element, or object capable of initiating voice, audio, video, media, or data exchanges within the RAN 100.

In accordance with an embodiment of the present invention, the components of the RAN controller 102 is implemented using one or more application-specific integrated circuits (ASICs) adapted to perform some or all of the applicable functions in hardware. Alternatively, the function is performed by one or more other processing units (or cores), on one or more integrated circuits. In other examples, other types of integrated circuits is used (e.g., Structured/Platform ASICs, Field Programmable Gate Arrays (FPGAs), and other Semi-Custom ICs), which is programmed in any manner known in the art. The functions of each unit is implemented, in whole or in part, with instructions embodied in a memory, formatted to be executed by one or more general or application-specific processors.

Particularly, the RAN controller 102 obtains a serving cell load parameter with respect to a neighbour cell load parameter associated with at least one neighbour cell of the plurality of neighbour cells 108a, 108b. The serving cell load parameter corresponds to a comparative load value of the serving cell 110 with respect to the at least one neighbour cell of the plurality of neighbour cells 108a, 108b.

Further, the RAN controller 102 identifies the at least one user equipment positioned in the serving cell 110 based on a channel quality index (CQI) and a throughput value. Additionally, the RAN controller 102 transmits the serving cell load parameter with respect to the neighbour cell load parameter associated with the at least one neighbour cell of the plurality of neighbour cells 108a, 108b to at least one identified user equipment. Subsequently, the RAN controller 102 selects the target cell from the plurality of neighbour cells 108a, 108b for at least one identified user equipment.

The identification of at least one user equipment positioned in the serving cell 110 may include determining one or more user equipment from the plurality of user equipment 112a-e positioned in the serving cell 110. Each of one or more determined user equipment has the channel quality index (CQI) less than a predetermined threshold lower CQI. Additionally, the identification of at least one user equipment positioned in the serving cell 110 may include identifying the at least one user equipment from one or more determined user equipment positioned in the serving cell 110. The at least one identified user equipment has the throughput value more than a predetermined threshold throughput.

In accordance with an embodiment of the present invention, the selection of the target cell for at least one identified user equipment may include obtaining at least one quality of service (QoS) class identifier (QCI) level associated with at least one active bearer in the at least one identified user equipment. The at least one QCI level corresponds to a QoS value required by the at least one active bearer in the at least one identified user equipment to provide a service. The at least one active bearer corresponds to connections between the at least one identified user equipment and a packet data network gateway to provide the service.

Additionally, the selection of the target cell for the at least one identified user equipment may include obtaining a received signal strength value, a first load value and a plurality of second load values for each of the plurality of neighbour cells 108a, 108b. The received signal strength value includes one of the Reference Signal Received Power (RSRP) and the Reference Signal Received Quality (RSRQ). The first load value includes average physical resource block (PRB) values of each of the plurality of neighbour cells 108a, 108b. The plurality of second load values includes average PRB values by at least one QCI level for each of the plurality of neighbour cells 108a, 108b.

Subsequently, the selection of the target cell for the at least one identified user equipment may include selecting the target cell from the plurality of neighbour cells 108a, 108b based on the at least one QCI level in the at least one identified user equipment and the received signal strength value, the first load value and the plurality of second load values for each the plurality of neighbour cells 108a, 108b. The selection of the target cell from the plurality of neighbour cells 108a, 108b for the at least one identified user equipment is executed when load of the serving cell 110 is greater than load of the at least one neighbour cell of the plurality of neighbour cells 108a, 108b. The selection of the target cell for the at least one identified user equipment further includes receiving at least one A3 event report from the at least one identified user equipment positioned in the serving cell 110.

Further, the RAN controller 102 may include repeating the identification of at least one user equipment positioned in the serving cell 110 based on the channel quality index (CQI) after a predetermined time interval. The identification of at least one user equipment positioned in the serving cell 110 based on the channel quality index (CQI) is executed when a new value of the serving cell load parameter with respect to the neighbour cell load parameter is identified.

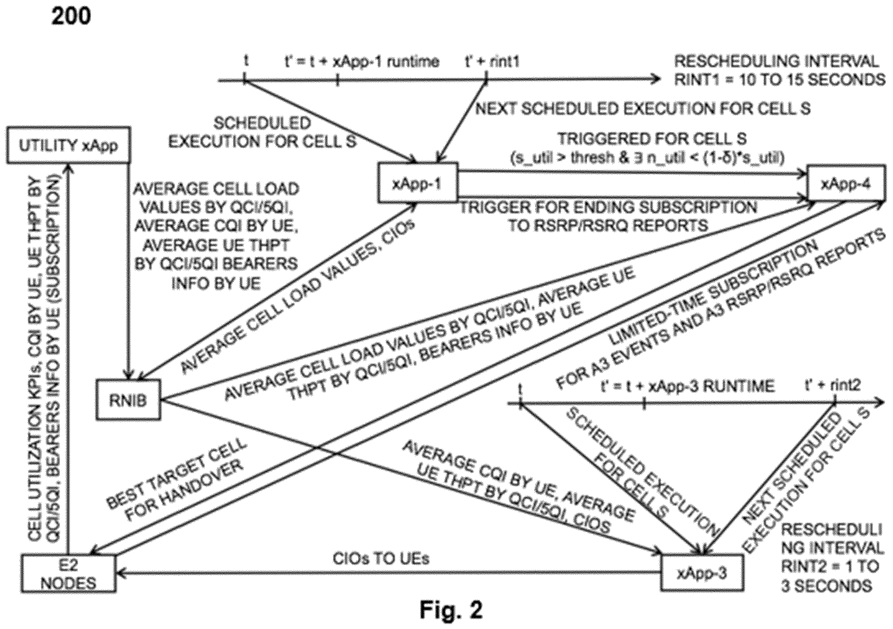

Fig. 2 is a sequence diagram illustrating a method for performing real-time handover in accordance with an embodiment of the present invention. In particular, the method to perform the real-time handover, herein is implemented through xApp-3 and x-App-4. Moreover, the xApp-3 and x-App-4 are enabled to perform the operations (virtually) of identification of at least one user equipment (xApp-3) and selecting a target cell (xApp-4). Further, the RAN controller 102 is configured to execute two processing threads, each of the two processing threads is executed in parallel. Subsequently, the RAN controller 102 is configured to obtain data associated with applications executed at the plurality of UEs 112a-e virtually implemented using a utility xApp.

In accordance with an embodiment, the utility xApp is configured to receive a cell utilization key performance indicator (KPIs) from the serving cell 110 and the plurality of neighbour cells 108a and 108b. In one example, the KPIs indicate current requirements and estimated requirement of bandwidth i.e., indicate the bandwidth of a cell, in each of the 4G and 5G network systems, and the plurality of UEs 112a-e connected to the serving cell 110 and the plurality of neighbour cells 108a and 108b.

The utility xApp obtains various KPIs and an active bearer information by the plurality of UEs 112a-e. Additionally, the utility xApp processes the various KPIs and the active bearer information (e.g., for averaging or aggregating) over a predetermined time interval. The utility xApp stores the various KPIs and the active bearer information in a radio network information base (RNIB) 114 for consumption by the xApps. The functions performed by the Utility xApp is incorporated with the xApps that makes use of the processed information.

In accordance with an embodiment, xApp-1 obtains the average Cell Load information and current values of the CIOs from the RNIB and update the CIOs for each serving cell with respect to each of corresponding neighbour, and vice versa, based on the relative loading at the cells 110, 108a and 108b. Particularly, the updated CIO values are stored back in the RNIB. For each pair of the serving cell 110 and corresponding neighbour cell (any of the 108a or 108b), there will only be one CIO value in the RNIB, and it would be marked as new until its consumed by the xApp-3.

Further, the xApp-3 identifies at least one user equipment to send the CIO updates. For identification of at least one user equipment, the xApp-3 utilizes averaged values of the CQI obtained from the plurality of UEs 112a-e and the throughput value for the plurality of UEs 112a-e indicating level of loading contributed by each UE.

Additionally, execution of the xApp-3 for the serving cell 110 is scheduled after the predetermined time interval following last execution. Furthermore, while the execution, if the xApp-3 finds a CIO value for a neighbour marked as new (i.e., it has not been consumed by the xApp-3 previously), the xApp-3 is relayed with each UE served by the serving cell 110 under consideration with the CQI below the predetermined threshold lower CQI (xApp-3 parameter).

The RAN controller 102 may adjust the predetermined threshold lower CQI between a range of prescribed CQI levels (also specified by different xApp-3 parameters) such that the number of the plurality of UEs 112a-e to which the CIO updates are sent is kept below a desired number (xApp-3 parameter).

In accordance with an embodiment, the xApp-3 utilized one or more handover parameters to identify at least one user equipment. The one or more handover parameters include, but not limited to, a lower CQI threshold, a higher CQI threshold, UE throughput threshold, number of the plurality of UEs, an inter measurement interval and throughput computation.

In accordance with an embodiment, the xApp-4 recommends the target cell for the real-time handover for the at least one identified UE that has reported the at least one A3 event. Additionally, the xApp-4 subscribes to at least one A3 event and RSRP/RSRQ reports when the CIOs are updated by the xApp-1 making the at least one A3 event more likely. The xApp-4 utilizes one or more parameters to recommend the target cell for the real-time handover for at least one identified UE. The one or more parameters include a minimum RSRP/RSRQ threshold, a first RSRP/RSRQ band threshold, a second RSRP/RSRQ band threshold, a first average load threshold, a second average load threshold, UE per QCI throughput threshold and an inter measurement interval.

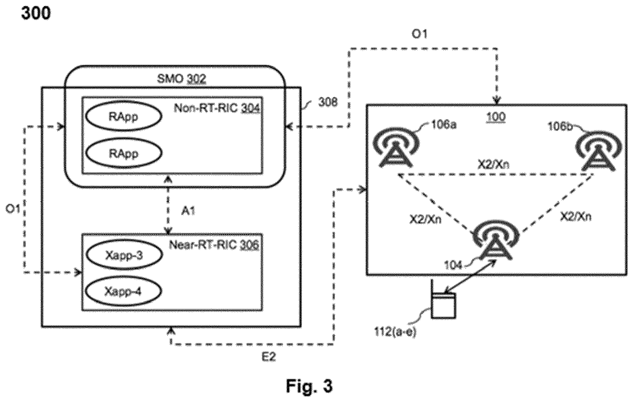

Fig. 3 is a block diagram illustrating an Open-Radio access network (O-RAN) environment in accordance with an embodiment of the present invention. The wireless communication system may consist of various network components connected via wireless networks. In particular, the wireless networks may comprise any wireless connectivity technology such as but not limited to radio links, millimeter wave, etc.

In particular, the wireless communication system may include one or more controllers connected with radio access networks, which are further connected with a plurality of user equipment. The wireless communication system includes the Open-Radio access network (O-RAN) environment 300. Moreover, the Open-Radio Access Network (O-RAN) environment 300 includes a Service Management and Orchestration (SMO) framework 302 and a radio access network (RAN) intelligent controller (RIC) 308 connected to the RAN (100). Further, the SMO 302 is configured to provide SMO functions/services such as data collection and provisioning services of the RAN 100.

The RAN 100, herein, is implemented in the O-RAN environment 300. The RAN 100 may implement a single radio access technology (RAT) (4G/5G) or multiple RATs (4G and 5G) using the base stations (104, 106a, 106b, 106c... 106n) located in the RAN 100. Further, the data collection of the SMO framework 302 may include, for example, data related to a bandwidth of a wireless communication network and at least one of UEs 112a-e.

In accordance with an embodiment, the base stations 104, 106a, 106b, 106c... 106n for e.g., a Radio Base Station (RBS), also referred to as e.g., evolved Node B ("eNB"), "eNodeB", "NodeB", "B node", gNB, or BTS (Base Transceiver Station), depending on the technology and terminology used. In some examples, the base stations 104, 106a, 106b, 106c... 106n is a logical node that handles transmission and reception of signals associated with the plurality of cells.

The base station 104 may connect to each other i.e., with the plurality of neighbour base stations 106a, 106b.. 106n via "Xn" interface either in a same network or to a network node of another network (intra-network). Each of the base stations 104, 106a, 106b, 106c... 106n may connect to one or more antennas.

Further, the RIC 308 is a non-real-time-radio intelligent controller (Non-RT-RIC) 304 and a near-real-time-radio intelligent controller (Near-RT-RIC) 306. Generally, the near real time RAN Intelligent Controller (near RT RIC) is a logical function that enables near-real-time control and optimization of O-RAN elements and resources via fine-grained data collection and actions over the E2 interface. In particular, the Non-Real Time Radio Intelligent Controller (non-RT-RIC) is a logical function that enables non-real-time control and optimization of RAN elements and resources, AI/ML workflow including model training and updates, and policy based guidance of applications/features in near-RT RIC. Further, it is a part of the Service Management and Orchestration Framework and communicates to the near-RT RIC using an A1 interface. Non-RT control functionality (> 1s) and near-Real Time (near-RT) control functions (< 1s) are decoupled in the RIC.

The Non-RT functions include service and policy management, RAN analytics and model-training for some of the near-RT RIC functionality, and non-RT RIC optimization. Further, O-CU is O-RAN Central Unit, which is a logical node hosting RRC (Radio Resource Control) protocol, SDAP (Service Data Adaptation Protocol) and PDCP (Packet Data Convergence Protocol). O-CU-CP is O-RAN Central Unit - Control Plane, which is a logical node hosting the RRC and the control plane part of the PDCP protocol.

The O-CU-UP is O-RAN Central Unit - User Plane, is a logical node hosting the user plane part of the PDCP protocol and the SDAP protocol. The O-DU is an O-RAN Distributed Unit, which is a logical node hosting RLC/MAC/High-PHY layers based on a lower layer functional split. The O-RU is an O-RAN Radio Unit, is a logical node hosting Low-PHY layer and RF processing based on a lower layer functional split. This is similar to 3GPP's "TRP" or "RRH" but more specific in including the Low-PHY layer (FFT/iFFT, PRACH extraction). An O1 interface is an interface between management entities in Service Management and Orchestration Framework and O-RAN managed elements, for operation and management, by which FCAPS (fault, configuration, accounting, performance, security) management, Software management, File management shall be achieved. The xAPP is an independent software plug-in to the Near-RT RIC platform to provide functional extensibility to the RAN by third parties. The near-RT RIC controller can be provided different functionalities by using programmable modules as xAPPs, from different operators and vendors.

In accordance with an embodiment, the Non-RT-RIC 304 is configured to support intelligent RAN optimization in non-real-time. Further, the Non-RT-RIC 304 is configured to leverage the SMO services and is a part of the SMO 302. One such advantage of configuring the RAN 100 within the O-RAN environment 300 is leveraging the intellectualization ("Artificial intelligence (AI)/Machine Learning (ML)) of the Non-RT-RIC 304 and the Near-RT-RIC 306.

In accordance with an embodiment, the Near-RT-RIC 306 may host plurality of xApps. The xApps (at the Near-RT-RIC 306) uses an "E2" interface to collect near real-time RAN 100 information and to provide value added services using these primitives, guided by the policies/configuration and the enrichment data provided by the "A1" interface from the xApps at the Non-RT-RIC 304. An "O1" interface collects data for training in the Non-RT RIC 304 integrated with the SMO 302.

In one example, the "E2" and "A1" interface is used to collect control messages, subscription messages (i.e., subscription to RSRP/RSRQ reports and Limited-time subscription for the at least one A3 event and A3 RSRP/RSRQ Reports), policy trigger messages, indication messages, machine learning (ML) management and enrichment information types of messages, and the like. The real-time measurements comprising RSRP/RSRQ measurements, channel quality measurements and the like.

The subscription messages such as, for example, RSRP/RSRP event messages, A3 events messages, limited-time based A3 event messages, and the like. The policy triggers messages, for example, spectrum allocation policies, radio assignment policies, and the like. The O-RAN environment 300 includes the virtualized network architecture having at least one RAN controller 102 that is configured to perform the operations as detailed above.

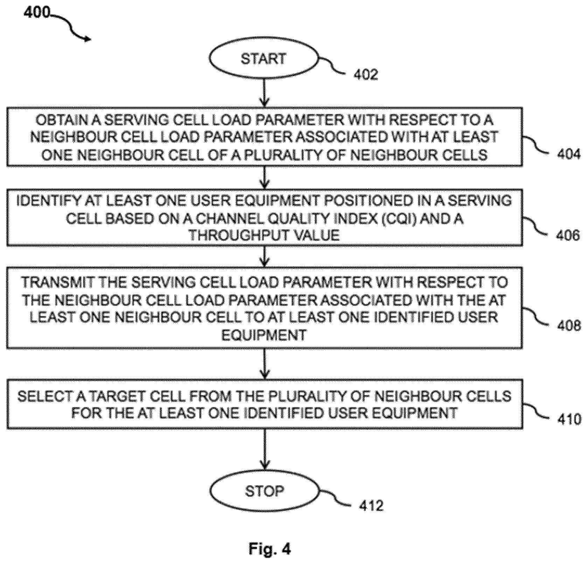

Fig. 4 is a flow chart illustrating a method to identify at least one user equipment for real-time handover and select a target cell in the open RAN (O-RAN) environment 300 in accordance with an embodiment of the present invention. It may be noted that in order to explain the steps of the method 400, references will be made to the elements explained in Fig. 1 and Fig. 3.

The method 400 starts at step 402 and proceeds to step 404. At step 404, the serving cell load parameter is obtained with respect to the neighbour cell load parameter associated with the at least one neighbour cell of the plurality of neighbour cells 108a, 108b.

At step 406, at least one user equipment is identified positioned in the serving cell 110 based on the channel quality index (CQI) and the throughput value.

At step 408, the serving cell load parameter with respect to the neighbour cell load parameter associated with the at least one neighbour cell is transmitted to the at least one identified user equipment.

At step 410, the target cell from the plurality of neighbour cells 108a, 108b is selected for at least one identified user equipment.

The method 400 terminates at step 412.

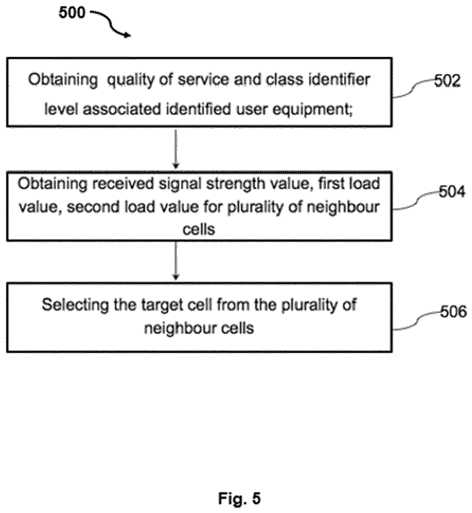

Fig. 5 is a flowchart illustrating a method for the selecting a target cell for the identified user equipment in accordance with an embodiment of the present invention. The method 500 starts at step 502 and proceeds to step 504 and 506.

At step 502, at least one quality of service (QoS) class identifier (QCI) level associated with at least one active bearer is obtained in the at least one identified user equipment.

At step 504, a received signal strength value, a first load value and a plurality of second load values for each of the plurality of neighbour cells 108a, 108b is obtained.

At step 506, the target cell from the plurality of neighbour cells 108a, 108b is selected based on the at least one QCI level in the at least one identified user equipment and the received signal strength value, the first load value and the plurality of second load values for each the plurality of neighbour cells 108a, 108b.

It may be noted that the method 400 and 500 is explained to have above stated process steps, however, those skilled in the art would appreciate that the flowchart may have more/less number of process steps which may enable all the above stated embodiments of the present disclosure.

Overall, the present disclosure provides a method to identify user equipment (UE) for real-time handover to select target cell for identified user equipment (UE) in an open-radio access network (O-RAN) environment enabling efficient utilization of cell load parameters to perform the real-time handover.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the invention will be apparent to those skilled in the art from consideration of the specification and practice of the invention. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the invention. It is intended that the specification and examples be considered as exemplary, with the true scope of the invention being indicated by the claims.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or non-volatile memory (e.g., magnetic disk storage, optical storage, EEPROM and/or solid state RAM)

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present invention and the features in the embodiments may be mutually combined.

The foregoing descriptions are merely specific implementations of the present invention but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for identifying at least one user equipment for a real-time handover and selecting a target cell by a Radio access network (RAN) controller (102) in a radio access network (RAN) environment, **characterized in that** steps of:
obtaining a serving cell load parameter with respect to a neighbour cell load parameter associated with at least one neighbour cell of a plurality of neighbour cells (108a, 108b);
identifying the at least one user equipment positioned in a serving cell (110) based on a channel quality index (CQI) and a throughput value;
transmitting the serving cell load parameter with respect to the neighbour cell load parameter associated with the at least one neighbour cell of the plurality of neighbour cells (108a, 108b) to an at least one identified user equipment; and
selecting the target cell from the plurality of neighbour cells (108a, 108b) for the at least one user equipment;
wherein the radio access network (RAN) environment is an open RAN (O-RAN) environment (300)

2. The method as claimed in claim 1, wherein the O-RAN environment (300) comprises the Radio access network (RAN) controller (102) and the serving cell (110).

3. The method as claimed in claim 2, wherein the Radio access network (RAN) controller (102) is connected with a plurality of user equipment (112a, 112b, 112c, 112d and 112e) positioned in the serving cell (110).

4. The method as claimed in claim 2 or claim 3, wherein the serving cell (110) covers a location for serving the plurality of user equipment(112a, 112b, 112c, 112d and 112e) and the serving cell (110) is positioned adjacent to the plurality of neighbour cells (108a, 108b).

5. The method as claimed in any preceding claim, wherein the serving cell load parameter corresponds to a comparative load value of the serving cell (110) with respect to the at least one neighbour cell of the plurality of neighbour cells (108a, 108b).

6. The method as claimed in any preceding claim, wherein the identification of the at least one user equipment positioned in the serving cell (110) further comprising:
determining one or more user equipment from the plurality of user equipments (112a-e) positioned in the serving cell (110); and
identifying the at least one user equipment from the one or more determined user equipment positioned in the serving cell (110).

7. The method as claimed in claim 6, wherein each of one or more determined user equipment has the channel quality index (CQI) less than a predetermined threshold lower CQI.

8. The method as claimed in claim 6 or claim 7, wherein the at least one identified user equipment has the throughput value more than a predetermined threshold throughput.

9. The method as claimed in any preceding claim, wherein the method further comprising a step of repeating the identification of the at least one user equipment positioned in the serving cell (110) based on the channel quality index after a predetermined time interval.

10. The method as claimed in any preceding claim, wherein the selection of the target cell from the plurality of neighbour cells (108a, 108b) for the at least one identified user equipment further comprising:
obtaining at least one quality of service (QoS) class identifier (QCI) level associated with at least one active bearer in the at least one identified user equipment;
obtaining a received signal strength value, a first load value and a plurality of second load values for each of the plurality of neighbour cells (108a, 108b); and
selecting the target cell from the plurality of neighbour cells (108a, 108b) based on the at least one QCI level in the at least one identified user equipment and the received signal strength value, the first load value and the plurality of second load values for each the plurality of neighbour cells (108a, 108b); wherein the received signal strength value comprises one of Reference Signal Received Power (RSRP) and Reference Signal Received Quality (RSRQ).

11. The method as claimed in claim 10, wherein the at least one QCI level corresponds to a QoS value required by the at least one active bearer in the at least one identified user equipment to provide a service, and the at least one active bearer corresponds to connections between the at least one identified user equipment and a packet data network gateway to provide the service.

12. The method as claimed in claim 10 or claim 11, wherein the first load value comprises average physical resource block (PRB) values of each of the plurality of neighbour cells (108a, 108b), wherein the plurality of second load values comprises average PRB values by the at least one QCI level for each of the plurality of neighbour cells (108a, 108b)

13. The method as claimed in any preceding claim, wherein the identification of the at least one user equipment positioned in the serving cell (110) based on the channel quality index (CQI) is executed when a new value of the serving cell load parameter with respect to the neighbour cell load parameter is identified.

14. The method as claimed in any preceding claim, wherein the selection of the target cell from the plurality of neighbour cells (108a, 108b) for the at least one identified user equipment is executed when load of the serving cell (110) is greater than load of the at least one neighbour cell of the plurality of neighbour cells (108a, 108b).

15. The method as claimed in any preceding claim, wherein the selection of the target cell from the plurality of neighbour cells (108a, 108b) for the at least one identified user equipment further comprising receiving at least one A3 event report from the at least one identified user equipment positioned in the serving cell (110).
